# EUROPÄISCHE PATENTSCHRIFT

(11) **EP 3 372 071 B1**
(45) Veröffentlichungstag und Bekanntmachung des Hinweises auf die Patenterteilung: **12.08.2020**
(21) Anmeldenummer: 17159437.7
(22) Anmeldetag: 06.03.2017
(51) Int. Cl.: A01K 1/015, A01N 65/00, A01N 59/02, A01N 49/00, A01N 25/08, A01N 63/22, A01N 65/08, A01N 65/20, A01N 65/44

(54) **EINSTREUMATERIAL FÜR DIE NUTZTIERHALTUNG UND EIN ENTSPRECHENDES HERSTELLUNGSVERFAHREN**
BEDDING MATERIAL FOR KEEPING FARM ANIMALS AND CORRESPONDING PRODUCTION METHOD
LITIÈRE POUR ÉLEVAGE ET PROCÉDÉ DE FABRICATION CORRESPONDANT

(43) Veröffentlichungstag der Anmeldung: 12.09.2018
(73) Patentinhaber: MHK Mühlenhof Kleeth GmbH, 17091 Knorrendorf OT Kleeth (DE)
(72) Erfinder: Aschenbroich, Rainer, 49163 Bohmte (DE); Kolmans, Hermann-Josef, 47625 Kevelaer (DE)
(74) Vertreter: Angerhausen, Christoph

(56) Entgegenhaltungen:
- EP-A1- 2 537 413
- EP-A2- 1 161 859
- EP-A2- 2 103 207
- WO-A2-03/003818
- DE-A1- 4 339 960
- DE-A1- 10 236 421
- DE-U1-202008 002 810
- DE-U1-202011 002 291
- DE-U1-202015 104 947
- US-A- 3 059 615
- US-A- 5 733 355
- US-A- 5 945 333
- US-A- 6 017 525
- US-A1- 2009 275 109
- US-A1- 2013 213 313

## Beschreibung

Die Erfindung geht aus von einem Einstreumaterial für die Nutztierhaltung, wobei das Einstreumaterial organische Pellets und/oder Granulat aufweist, die mit mindestens einer Säure oder deren Salze versetzt sind. Ein derartiges Einstreumaterial ist aus der EP 2 103 207 A2 bekannt. Ähnliche Einstreumaterialien und entsprechende Herstellungsverfahren beschreiben auch die DE 10 2014 002 775 A1, die DE 20 2015 104 947 U1, die EP 1 738 639 A1, EP 1 161 859 A2 sowie die WO 03/003818 A2.

In Folge der mechanischen Ernte beinhaltet das Stroh, aus dem häufig das Einstreumaterial, insbesondere die Pellets oder das Granulat hergestellt werden, in der Regel erhebliche Mengen an Staub und Sand, in denen sich bakterielle Krankheitserreger oder krankheitserregende Schimmelpilze befinden können. Unbehandelt als Einstreu genutzt, kann die Gesundheit der Tiere beeinträchtigt werden, was in der Folge zu Leistungseinbußen führt beziehungsweise die Kosten der Nutztierhaltung steigen lässt.

Es ist daher die Aufgabe der Erfindung, ein Verfahren zur Herstellung eines Einstreumaterials der eingangs beschriebenen Art vorzuschlagen, bei dem das erhaltene Einstreumaterial einen geringen Anteil potentieller Krankheitserreger aufweist, für ein angenehmes Stallklima sorgt und eine Reduzierung der Schadgaskonzentration im Stall begünstigt.

Diese Aufgabe wird durch ein Verfahren mit den Eigenschaften des Anspruchs 1 gelöst. Der nebengeordnete Anspruch 7 betrifft ein entsprechendes Einstreumaterial. Vorteilhafte Ausführungsformen sind Gegenstand der jeweils abhängigen Ansprüche.

Demgemäß ist vorgesehen, dass die Pellets und/oder das Granulat weiterhin mit mindestens einem natürlichen oder naturidentischen Monoterpen und/oder Phenol und/oder Phenylpropanoide und/oder Flavonoid und mit einer Bakteriensuspension versetzt sind, die mindestens eine der Spezies Bacillus amyloliquefaciens, Bacillus licheniformis, Bacillus subtilis, Bacillus megaterium und/oder Bacillus pumilus einzeln oder in Kombinationen enthält.

Die Pellets und/oder das Granulat bzw. der Rohstoff aus welchem sie durch Verdichten und die erfindungsgemäße Behandlung gewonnen werden, können zumindest größtenteils aus einem organischen Material bestehen, insbesondere aus Pflanzlichem Fasermaterial und besonders bevorzugt aus Stroh (aus Weizen, Gerste, Triticale, Roggen, Hafer, Luzerne, Raps, etc.).

Die Säure kann mindestens eine anorganische Säure (beispielsweise Salzsäure, Salpetersäure, Schwefelsäure, und dergleichen) oder deren Salze und/oder eine organische Säure (beispielsweise Propionsäure, Ameisensäure, Sorbinsäure, Benzoesäure, Milchsäure, Ascorbinsäure, Fumarsäure, und dergleichen) oder deren Salzen aufweisen. Die Säure hat konservierende Eigenschaften speziell gegenüber Hefen und Schimmelpilzen.

Die Dosierung der mindestens einen anorganischen Säure oder deren Salzen und/oder organischen Säure oder deren Salzen oder einer die mindestens eine Säure enthaltenden Säurekombination aus mehreren unterschiedlichen Säuren kann 1 bis 10 kg pro 1000 kg Pellets und/oder Granulat betragen.

Die Bacillus-Kulturen können einzeln oder als Mischkulturen eingesetzt werden, wobei die genannten Einzelkulturen untereinander kombiniert werden können, so dass Mischkulturen aus zwei, drei oder vier unterschiedlichen Kombinationen beziehungsweise aus allen fünf Stämmen gebildet werden können.

Durch den Zusatz der Mikroorganismuskulturen kann freigesetzter Ammoniak (NH₃) in der feuchten Umgebung zu NH₄⁺ umgewandelt werden, welches den Mikroorganismen als Nährstoff dient, wodurch wiederum Urease gebildet wird, die den Harnstoff abbaut. Es hat sich herausgestellt, dass insbesondere die Zugabe einer Einzel- oder Mischkultur, die alle der fünf zuvor genannten Spezies kombiniert, eine Zersetzung beschleunigt und dementsprechend eine besonders schnelle Geruchsbindung ermöglicht.

Die Bakteriensuspension wird vorzugsweise der Einstreu nach einem Trocknungsprozess zugegeben, indem sie in flüssiger Lösung über dem Einstreumaterial, insbesondere den Pellets und/oder dem Granulat, versprüht wird. Dabei hat es sich als besonders vorteilhaft herausgestellt, wenn die versprühte Lösung der Bakteriensuspension eine Konzentration von 500 Millionen bis 2 Milliarden Bakterien pro Milliliter aufweist.

Das Einstreumaterial kann weiterhin ein Alkalibisulfit, insbesondere Natriumbisulfit, und/oder ein Alaun, insbesondere Kaliumaluminiumalaun aufweisen. Die Alkalibisulfitlösung, vorzugsweise das Natriumbisulfit, kann in einer Konzentration von 35 % bis 45 % und vorzugsweise 38 % bis 40 % als flüssige Lösung über den Pellets beziehungsweise dem Granulat versprüht werden. Bekanntermaßen nimmt der ausgeschiedene Urin der Tiere den stechenden Geruch von Ammoniak an, da der Harnstoff enzymatisch durch Urease in Ammoniak NH₃ und Kohlendioxid umgewandelt wird. Es ist daher vorteilhaft, als Geruchsverbesserer Alkalibisulfite einzusetzen, die beim Kompostierungsprozess die Umwandlung des Harnstoffs beziehungsweise des Ammoniaks in Nitrat-Stickstoff bewirken können. Kalialaun dissoziiert in wässriger Lösung vollständig zu Kaliumionen,

Aluminiumionen und Sulfationen, wobei Sulfationen bakterienabtötend und keimhemmend wirken.

Das natürliche oder naturidentische Monoterpen und/oder Phenol und/oder Phenylpropanoide und/oder Flavonoid können in Form von mindestens einem Kräuter- und/oder Gewürzextrakt oder in Form von mindestens einem ätherischen Öl oder in Form mindestens eines reinen Wirkstoffes in dem Einstreumaterial enthalten sein.

Das natürliche oder naturidentische pflanzliche Monoterpen und/oder Phenol und/oder Phenylpropanoide und/oder Flavonoid kann mindestens einen der Wirkstoffe (+)-Terpinen-4-ol, a-Terpinen, Terpineol, Carvacrol, Thymol, Zimtaldehyd, Eugenol, Limonen, Linalool, Carvon, Anethol, Menthol, Fenchon und Cineol aufweisen.

Die Dosierung des natürlichen oder naturidentischen Monoterpens und/oder Phenols und/oder Phenylpropanoids und/oder Flavonoids kann 0,2 kg bis 5 kg pro 100 kg Pellets und/oder Granulat und besonders bevorzugt 0,5 kg bis 2,0 kg pro 1000 kg Pellets und/oder Granulat betragen.

Eine beispielhafte Zusammensetzung des Kräuter- und Gewürzextraktes kann die zehn nachfolgenden ätherischen Öle, Extrakte oder Wirkstoffe (ggf. in Kombination mit einem entsprechend der vorgesehenen Anwendung konzipierten Emulsionssystems zur Verbesserung der Sprüh- und Haltbarkeitseigenschaften) aufweisen:

| | | |
|---|---|---|
| 1. | 5-15 Gew.-% Teebaum | (1,5 - 40% Terpineol) |
| 2. | 5-15 Gew.-% Oregano | (1,5 - 90% Carvacrol) |
| 3. | 5-15 Gew.-96 Thymian | (1,5 - 90% Thymol) |
| 4. | 5-15 Gew.-% Zimt | (1,5 - 90% Zimtaöldehyd) |
| 5. | 5-15 Gew.-% Kümmel | (1,5 - 90% Carvon) |
| 6. | 5-15 Gew.-% Knoblauch | (1,5 - 90% Allicin) |
| 7. | 5-15 Gew.-% Anis | (1,5 - 90% Anethol) |
| 8. | 5-15 Gew.-% Fenchel | (1,5 - 90% Fenchon) |
| 9. | 5-15 Gew.-% Pfefferminz | (1,5 - 90% Menthol) |
| 10. | 5-15 Gew.-% Eukalyptus | (1,5 - 90% Cineol) |

Gemäß einem anderen Aspekt betrifft die Erfindung ein Verfahren zur Herstellung eines Einstreumaterials der zuvor beschriebenen Art, wobei das Verfahren die Schritte aufweist:
a) Bereitstellen eines organischen Rohmaterials aus Pflanzenfasern, insbesondere aus Stroh (beispielsweise aus Weizen, Gerste, Triticale, Roggen, Hafer, Luzerne, Raps, etc.) im ungepressten oder vorgepressten Zustand;
b) Versetzen des organischen Rohmaterials mit mindestens einer Säure und mit mindestens einem natürlichen oder naturidentischen Monoterpen und/oder Phenol und/oder Phenylpropanoide und/oder Flavonoid; und danach
c) Verdichten des organischen Rohmaterials zu Pellets und/oder zu Granulat.

Das organische Rohmaterial, insbesondere das Stroh (etwa aus Weizen, Gerste, Triticale, Roggen, Hafer, Luzerne, Raps und dergleichen) kann bei dem Versetzen, gegebenenfalls nachdem es entstaubt und einer hydrothermischen Druckbehandlung unterzogen worden ist, mit der mindestens einen Säure, insbesondre einer anorganischen Säure (bevorzugt Salzsäure, Salpetersäure, Schwefelsäure, und dergleichen) oder deren Salzen und/oder aus einer organischen Säure (bevorzugt Propionsäure, Ameisensäure, Sorbinsäure, Benzoesäure, Milchsäure, Ascorbinsäure, Fumarsäure und dergleichen) oder deren Salzen bei einer Dosierung von 1 kg bis 10 kg pro 1000 kg Rohmaterial versetzt werden.

Bei dem Versetzen wird das Rohmaterial zuerst mit einer anorganischen Säure (bevorzugt Salzsäure, Salpetersäure, Schwefelsäure, etc.) oder deren Salzen und/oder mit einer organischen Säure (bevorzugt Propionsäure, Ameisensäure, Sorbinsäure, Benzoesäure, Milchsäure, Ascorbinsäure, Fumarsäure, etc.) oder deren Salzen, anschließend mit einer Bakteriensuspension und danach mit dem mindestens einen natürlichen oder naturidentischen Monoterpen und/oder Phenol und/oder Phenylpropanoide und/oder Flavonoid versetzt.

Nach dem Versetzen des Rohmaterials mit der anorganischen Säure (bevorzugt Salzsäure, Salpetersäure, Schwefelsäure, etc.) oder deren Salzen und/oder aus einer organischen Säure (bevorzugt Propionsäure, Ameisensäure, Sorbinsäure, Benzoesäure, Milchsäure, Ascorbinsäure, Fumarsäure, etc.) oder deren Salzen und vor dem Versetzen des mit der Säure versetzenden Rohmaterials mit einer Bakteriensuspension kann das mit der Säure versetzte Rohmaterial getrocknet werden.

Bei dem Versetzen kann das Rohmaterial nach dem Versetzen mit einer Bakteriensuspension und vor dem Versetzen mit dem natürlichen oder naturidentischen Monoterpen und/oder Phenol und/oder Phenylpropanoide und/oder Flavonoid mit einem Alkalibisulfit, insbesondere mit Natriumbisulfit, und danach mit einem Alaun versetzt werden.

Bei dem Versetzen kann das natürliche oder naturidentische Monoterpen und/oder Phenol und/oder Phenylpropanoid und/oder Flavonoid in Form von mindestens einem Kräuter- und/oder Gewürzextrakt oder in Form von mindestens einem ätherischen Öl oder in Form mindestens eines reinen Wirkstoffes (in Kombination mit einem entsprechend der vorgesehenen Anwendung konzipierten Emulsionssystems zur Verbesserung der Sprüh- und Haltbarkeitseigenschaften) bei einer Dosierung von 0,2 kg bis 5 kg und insbesondere von 0,5 kg bis 2,0 kg pro 1000 kg organischen Rohmaterials dem organischen Rohmaterial zugesetzt werden.

Das Versetzen kann durch Aufsprühen oder Tränken erfolgen.

Das mit den natürlichen oder naturidentischen Monoterpenen und/oder Phenolen und/oder Phenylpropanoiden und/oder Flavonoiden versetzte Einstreumaterial hat antibakterielle Wirkung insbesondere gegen die in der Geflügelzucht relevanten Bakterien Salmonella, E. Coli und Clostridien gezeigt, und es hat darüber hinaus einen positiven Effekt auf den respiratorischen Trakt der Tiere.

Natürliche oder naturidentische Monoterpene und/oder Phenole und/oder Phenylpropanoide und/oder Flavonoide haben weiterhin die Eigenschaft, dass sie in Verbindung mit einer speziell für diese Anwendung entwickelten Emulsion/Suspension beständig gegenüber dem Verdichtungsschritt sind, bei dem das mit den Monoterpenen und/oder Phenolen und/oder Phenylpropanoiden und/oder Flavonoiden versetzte Rohmaterial zu Pellets und/zu Granulat verarbeitet wird, so dass zur weiteren Prozessvereinfachung bereits das Rohmaterial vor dem Verdichten mit den Monoterpenen und/oder Phenolen und/oder Phenylpropanoiden und/oder Flavonoiden versetzt werden kann und damit insbesondere keine Nachbehandlung des Einstreumaterials erforderlich ist.

Bei dem Versetzen kann eine Bakteriensuspension nach dem Trocknen des mit der anorganischen Säure (bevorzugt Salzsäure, Salpetersäure, Schwefelsäure, etc.) oder deren Salzen und/oder aus einer organischen Säure (bevorzugt Propionsäure, Ameisensäure, Sorbinsäure, Benzoesäure, Milchsäure, Ascorbinsäure, Fumarsäure, etc.) oder deren Salzen versetzen Rohmaterials in flüssiger Lösung auf dem Rohmaterial versprüht werden, wobei die Lösung insbesondere 500 Millionen bis 2 Milliarden Bakterien pro Milliliter Lösung aufweisen kann.

Das Alkalibisulfit, insbesondere das Natriumbisulfit, kann als eine flüssige Lösung mit einer Konzentration von 35 % bis 45 %, insbesondere mit 38 % bis 40 % auf dem Rohmaterial versprüht werden.

Weitere Einzelheiten der Erfindung werden anhand der nachstehenden Figur erläutert. Dabei zeigt:

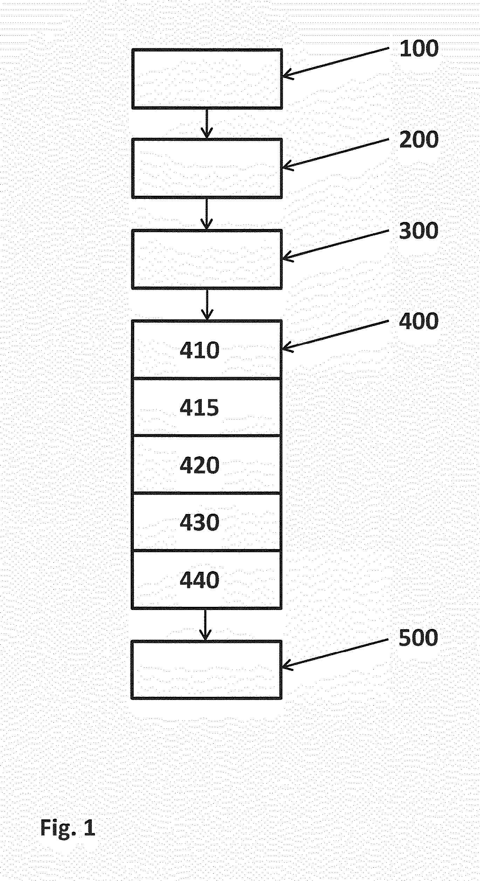

Figur 1 schematisch ein Ablaufdiagramm für ein beispielhaftes Verfahren zur Herstellung eines Einstreumaterials für die Nutztierhaltung gemäß einer Ausführungsform der vorliegenden Erfindung.

Demgemäß ist bei dem beispielhaften Herstellungsverfahren vorgesehen, dass in einem Schritt 100 ein organisches Rohmaterial aus Pflanzenfasern, beispielsweise Stroh (etwa aus mindestens einem von Weizen, Gerste, Triticale, Roggen, Hafer, Luzerne, Raps, oder dergleichen), im ungepressten oder vorgepressten Zustand für die Weiterverarbeitung bereitgestellt wird. Das so bereitgestellte Rohmaterial kann in einem Schritt 200 entstaubt sowie in einem ergänzenden Schritt 300 hydrothermisch druckbehandelt werden, um insbesondere in bakterieller Hinsicht ein wenig belastetes und damit hochwertiges Ausgangsprodukt für die Weiterverarbeitung zur Verfügung zu stellen.

In einem weiteren Schritt 400 wird das organische Rohmaterial, gegebenenfalls nach dem Entstauben 200 und der hydrothermischen Druckbehandlung 300, mit mindestens einer anorganischen Säure (bevorzugt Salzsäure, Salpetersäure, Schwefelsäure, etc.) oder deren Salzen und/oder mit mindestens einer organischen Säure (bevorzugt Propionsäure, Ameisensäure, Sorbinsäure, Benzoesäure, Milchsäure, Ascorbinsäure, Fumarsäure, etc.) oder deren Salzen, mindestens einer Bakteriensuspension und mit mindestens einem natürlichen oder naturidentischen Monoterpen und/oder Phenol und/oder Phenylpropanoid und/oder Flavonoid versetzt.

Die Säure kann mindestens eine anorganische Säure (bevorzugt Salzsäure, Salpetersäure, Schwefelsäure, etc.) oder deren Salzen und/oder mindestens eine organische Säure (bevorzugt Propionsäure, Ameisensäure, Sorbinsäure, Benzoesäure, Milchsäure, Ascorbinsäure, Fumarsäure, etc.) oder deren Salzen aufweisen, wobei sie dem Rohmaterial bei einer Dosierung von 1 kg bis 10 kg pro 1000 kg Rohmaterial zugegeben wird.

Das Versetzen 400 kann insbesondere umfassen, dass das Rohmaterial zuerst in einem Schritt 410 mit der Säure oder dem Säuregemisch versetzt wird, anschließend in einem Schritt 420 mit der Bakteriensuspension versetzt wird und danach mit dem mindestens einem natürlichen oder naturidentischen Monoterpen und/oder Phenol und/oder Phenylpropanoid und/oder Flavonoid in einem Schritt 440 versetzt wird.

Nachdem in dem Schritt 420 das Rohmaterial mit der Bakteriensuspension versetzt worden ist und bevor das Rohmaterial in dem Schritt 440 mit dem natürlichen oder naturidentischen Monoterpen und/oder Phenol und/oder Phenylpropanoid und/oder Flavonoid versetzt wird, kann das Rohmaterial in einem Schritt 430 mit einem Alkalibisulfit, insbesondere mit Natriumbisulfit und danach oder gleichzeitig mit einem Alaun versetzt werden.

Wenn bei dem Versetzen 400 das Rohmaterial mit einem natürlichen oder naturidentischen Monoterpen und/oder Phenol und/oder Phenylpropanoid und/oder Flavonoid versetzt wird, kann dies in Form der Zugabe von mindestens mindestens einem Kräuter- und/oder Gewürzextrakt oder in Form von mindestens einem ätherischen Öl oder in Form von mindestens eines reinen Wirkstoffes (in Kombination mit einem entsprechend der vorgesehenen Anwendung konzipierten Emulsionssystems zur Verbesserung der Sprüh- und Haltbarkeitseigenschaften) bei einer Dosierung von 0,2 kg bis 5 kg und insbesondere von 0,5 kg bis 2,0 kg pro 1000 kg organischen Rohmaterials erfolgen.

Der Kräuter- und/oder Gewürzextrakt oder in Form von mindestens einem ätherischen Öl oder in Form von mindestens eines reinen Wirkstoffes (in Kombination mit einem entsprechend der vorgesehenen Anwendung konzipierten Emulsionssystems zur Verbesserung der Sprüh- und Haltbarkeitseigenschaften) können für das Versetzen vor dem Verdichten auf das Rohmaterial aufgesprüht oder als pulvrige/granulare Feststoffe mit dem Rohmaterial vermischt werden.

Bei dem Versetzen 400 kann die Bakteriensuspension nach dem Trocknen 415 des mit der anorganischen Säure (bevorzugt Salzsäure, Salpetersäure, Schwefelsäure, etc.) oder deren Salzen und/oder aus einer organischen Säure (bevorzugt Propionsäure, Ameisensäure, Sorbinsäure, Benzoesäure, Milchsäure, Ascorbinsäure, Fumarsäure, etc.) oder deren Salzen versetzten Rohmaterials in flüssiger Lösung auf dem Rohmaterial versprüht werden. Dabei kann die Lösung insbesondere 500 Millionen bis 2 Milliarden Bakterien pro Milliliter Lösung aufweisen.

Das Natriumbisulfit kann als eine flüssige Lösung mit einer Konzentration von 35% bis 45% und insbesondere von 38% bis 40% auf dem Rohmaterial versprüht werden.

Der verarbeitete Kräuter- und/oder Gewürzextrakt und/oder ätherisches Öl und/oder reiner Wirkstoff (in Kombination mit einem entsprechend der vorgesehenen Anwendung konzipierten Emulsionssystems zur Verbesserung der Sprüh- und Haltbarkeitseigenschaften) kann zu gleichen Teilen die ätherischen Öle beziehungsweise Extrakte aus Teebaum, Oregano, Thymian, Zimt, Kümmel, Knoblauch, Anis, Fenchel und Pfefferminz und Eukalyptus und/oder deren Einzelwirkstoffe aufweisen, wobei je nach Anwendungsfall Anpassungen der Gewichtung der ätherischen Öle beziehungsweise Extrakte oder Wirkstoffe vorgenommen werden können.

## Patentansprüche

1. Verfahren zur Herstellung eines Einstreumaterials, das die Schritte aufweist:
a) Bereitstellen (100) eines organischen Rohmaterials aus Pflanzenfasern, insbesondere von Stroh im ungepressten oder vorgepressten Zustand;
b) Versetzen (400) des organischen Rohmaterials zuerst mit mindestens einer Säure, einer Säurekombination, oder deren Salze, anschließend mit einer Bakteriensuspension (420) aufweisend mindestens eine der Spezies Bacillus amyloliquefaciens, Bacillus licheniformis, Bacillus subtilis, Bacillus megaterium und/oder Bacillus pumilus einzeln oder in Kombinationen und danach mit mindestens einem natürlichen oder naturidentischen Monoterpen und/oder Phenol und/oder Phenylpropanoid und/oder Flavonoid; und danach
c) Verdichten (500) des organischen Rohmaterials zu Pellets und/oder zu Granulat.

2. Verfahren nach Anspruch 1, bei dem das organische Rohmaterial, insbesondere das Stroh, bei dem Versetzen (400), gegebenenfalls nachdem es entstaubt (200) und einer hydrothermischen Druckbehandlung (300) unterzogen worden ist, mit mindestens einer anorganischen Säure, insbesondere Salzsäure, Salpetersäure, Schwefelsäure, oder mit deren Salzen und/oder mit einer organischen Säuren, insbesondere Propionsäure, Ameisensäure, Sorbinsäure, Benzoesäure, Milchsäure, Ascorbinsäure, Fumarsäure, oder mit deren Salzen bei einer Dosierung von 1 kg bis 10 kg pro 1000 kg Rohmaterial versetzt wird.

3. Verfahren nach Anspruch 1, bei dem bei dem Versetzen (400) das Rohmaterial nach der Bakteriensuspension (420) und vor dem natürlichen oder naturidentischen Monoterpens und/oder Phenols und/oder Phenylpropanoids und/oder Flavonoids (440) mit einem Alkalibisulfit (430), insbesondere mit Natriumbisulfit, und danach mit einem Alaun versetzt wird.

4. Verfahren nach einem der Ansprüche 1 bis 3, bei dem bei dem Versetzen (400) das natürliche oder naturidentische Monoterpen und/oder Phenol und/oder Phenylpropanoid und/oder Flavonoid in Form von mindestens einem Kräuter- und/oder Gewürzextrakt, oder in Form von mindestens einem ätherischen Öl, oder in Form mindestens eines reinen Wirkstoffes bei einer Dosierung von 0,2 kg bis 5 kg und insbesondere bei einer Dosierung von 0,5 kg bis 2,0 kg pro 1000 kg dem organischen Rohmaterial zugegeben wird.

5. Verfahren nach einem der Ansprüche 1 bis 4, bei dem bei dem Versetzen (400) die Bakteriensuspension nach dem Trocknen (415) des mit der Säure (410) versetzen Rohmaterials in flüssiger Lösung auf dem Rohmaterial versprüht wird, wobei die Lösung insbesondere 500 Millionen bis 2 Milliarden Bakterien pro Milliliter Lösung aufweist.

6. Verfahren nach Anspruch 3, bei der das Alkalibisulfit, insbesondere das Natriumbisulfit, als eine flüssige Lösung mit einer Konzentration von 35 bis 45%, insbesondere mit 38 bis 40 % auf dem Rohmaterial versprüht wird.

7. Einstreumaterial für die Nutztierhaltung erhältlich durch das Verfahren nach einem der Ansprüche 1 bis 6, wobei das Einstreumaterial organische Pellets und/oder Granulat aufweist, die mit mindestens einer Säure oder einer Säurekombination oder deren Salze versetzt sind, wobei die Pellets und/oder das Granulat mit mindestens einem natürlichen oder naturidentischen Monoterpen und/oder Phenol und/oder Phenylpropanoid und/oder Flavonoid und mit einer Bakteriensuspension versetzt sind, die mindestens eine der Spezies Bacillus amyloliquefaciens, Bacillus licheniformis, Bacillus subtilis, Bacillus megaterium und/oder Bacillus pumilus einzeln oder in Kombinationen enthält.

8. Einstreumaterial nach Anspruch 7, bei dem die Säure oder das Säurekombination eine anorganische Säure, insbesondere Salzsäure, Salpetersäure oder Schwefelsäure und/oder eine organische Säure, insbesondere Propionsäure, Ameisensäure, Sorbinsäure, Benzoesäure, Milchsäure, Ascorbinsäure oder Fumarsäure aufweist.

9. Einstreumaterial nach Anspruch 7 oder 8, bei dem die Dosierung der mindestens einen Säure und/oder deren Salz oder einer die mindestens eine Säure enthaltenden Säurekombination aus mehreren unterschiedlichen Säuren oder Salzen 1 bis 10 kg pro 1000 kg Pellets und/oder Granulat beträgt.

10. Einstreumaterial nach einem der Ansprüche 7 bis 9, bei dem die Pellets und/oder das Granulat weiterhin mit einem Alkalibisulfit, insbesondere Natriumbisulfit, und/oder einem Alaun, insbesondere Kaliumaluminiumalaun, versetzt sind.

11. Einstreumaterial nach einem der Ansprüche 7 bis 10, bei dem das natürliche oder naturidentische Monoterpen und/oder Phenol und/oder Phenylpropanoid und/oder Flavonoid in Form von mindestens einem Kräuter- und/oder Gewürzextrakt oder in Form von mindestens einem ätherischen Öl, oder in Form mindestens eines reinen Wirkstoffes in dem Einstreumaterial enthalten ist.

12. Einstreumaterial nach einem der Ansprüche 7 bis 11, bei dem das pflanzliche Phenol und/oder das Flavonoid mindestens einen der Wirkstoffe (+)-Terpinen-4-ol, a-Terpinen, Terpineol, Carvacrol, Thymol, Zimtaldehyd, Eugenol, Linalool, Carvon, Anethol, Fenchon und Cineol aufweist.

13. Einstreumaterial nach einem der Ansprüche 7 bis 12, bei dem die Dosierung des natürlichen oder naturidentischen Monoterpens und/oder Phenols und/oder Phenylpropanoids und/oder Flavonoids 0,2 kg bis 5 kg pro 1000 kg Pellets und/oder Granulat und besonders bevorzugt 0,5 kg bis 2,0 kg pro 1000 kg Pellets und/oder Granulat beträgt.

## Claims

1. A method of producing a bedding material comprising the steps of:
a) providing (100) an organic raw material of plant fibres, in particular straw in the unpressed or prepressed state;
b) adding (400) to the organic raw material firstly at least one acid, an acid combination or its salts, then a bacterial suspension (420) comprising at least one of the species Bacillus amyloliquefaciens, Bacillus licheniformis, Bacillus subtilis, Bacillus megaterium and/or Bacillus pumilus individually or in combinations and then at least one natural or nature-identical monoterpene and/or phenol and/or phenylpropanoid and/or flavonoid; and then
c) compressing (500) of the organic raw material into pellets and/or granules.

2. The method according to claim 1, in which the organic raw material, in particular the straw, is mixed (400), optionally after it has been dedusted (200) and subjected to a hydrothermal pressure treatment (300), with at least one inorganic acid, in particular hydrochloric acid, nitric acid, sulphuric acid, or salts thereof, and/or an organic acid, in particular propionic acid, formic acid, sorbic acid, benzoic acid, lactic acid, ascorbic acid, fumaric acid, or salts thereof, is added at a dosage of 1 kg to 10 kg per 1000 kg of raw material.

3. The method according to claim 1, in which in the addition (400) the raw material is treated with an alkali bisulphite (430), in particular with sodium bisulphite, after the bacterial suspension (420) and before the natural or nature-identical monoterpene and/or phenol and/or phenylpropanoids and/or flavonoids (440), and then with an alum.

4. The method according to one of claims 1 to 3, in which in the course of the mixing (400) the natural or nature-identical monoterpene and/or phenol and/or phenylpropanoid and/or flavonoid is added to the organic raw material in the form of at least one herb and/or spice extract, or in the form of at least one essential oil, or in the form of at least one pure active substance at a dosage of 0.2 kg to 5 kg and in particular at a dosage of 0.5 kg to 2.0 kg per 1000 kg.

5. The method according to one of claims 1 to 4, in which, during the addition (400), the bacterial suspension is sprayed in liquid solution onto the raw material after drying (415) of the raw material to which the acid (410) has been added, the solution containing in particular 500 million to 2 billion bacteria per millilitre of solution.

6. The method according to claim 3, in which the alkali bisulfite, in particular the sodium bisulfite, is sprayed as a liquid solution with a concentration of 35 to 45%, in particular 38 to 40%, on the raw material.

7. Bedding material for livestock farming obtainable by the method according to one of Claims 1 to 6, wherein the bedding material comprises organic pellets and/or granules to which at least one acid or an acid combination or salts thereof is added, wherein the pellets and/or the granules are mixed with at least one natural or nature-identical monoterpene and/or phenol and/or phenylpropanoid and/or flavonoid and with a bacterial suspension containing at least one of the species Bacillus amyloliquefaciens, Bacillus licheniformis, Bacillus subtilis, Bacillus megaterium and/or Bacillus pumilus individually or in combinations.

8. The bedding material according to claim 7, in which the acid or acid combination comprises an inorganic acid, in particular hydrochloric acid, nitric acid or sulphuric acid and/or an organic acid, in particular propionic acid, formic acid, sorbic acid, benzoic acid, lactic acid, ascorbic acid or fumaric acid.

9. The bedding material according to claim 7 or 8, in which the dosage of the at least one acid and/or its salt or an acid combination of several different acids or salts containing the at least one acid is 1 to 10 kg per 1000 kg of pellets and/or granules.

10. The bedding material according to any one of claims 7 to 9, in which the pellets and/or granules are further mixed with an alkali bisulfite, in particular sodium bisulfite, and/or an alum, in particular potassium aluminum alum.

11. The bedding material according to one of Claims 7 to 10, in which the natural or nature-identical monoterpene and/or phenol and/or phenylpropanoid and/or flavonoid is contained in the bedding material in the form of at least one herb and/or spice extract or in the form of at least one essential oil, or in the form of at least one pure active ingredient.

12. The bedding material according to one of Claims 7 to 11, in which the vegetable phenol and/or the flavonoid contains at least one of the active ingredients (+)-terpinen-4-ol, a-terpinene, terpineol, carvacrol, thymol, cinnamic aldehyde, eugenol, linalool, carvone, anethole, fenchone and cineole.

13. The bedding material according to any one of Claims 7 to 12, in which the dosage of the natural or nature-identical monoterpene and/or phenol and/or phenylpropanoid and/or flavonoid is 0.2 kg to 5 kg per 1000 kg of pellets and/or granules, and particularly preferably 0.5 kg to 2.0 kg per 1000 kg of pellets and/or granules.

## Revendications

1. Procédé de fabrication d'un matériau de litière qui comprend les étapes suivantes :
a) mise à disposition (100) d'une matière première organique à partir de fibres végétales, plus particulièrement de paille dans un état non comprimé ou pré-comprimé ;
b) mélange (400) de la matière première organique d'abord avec au moins un acide, une combinaison d'acides, ou de leurs sels, puis avec une suspension bactérienne (420) comprenant au moins une des espèces Bacillus amyloliquefaciens, Bacillus licheniformis, Bacillus subtilis, Bacillus megaterium et/ou Bacillus pumilus séparément ou en combinaisons puis avec au moins un monoterpène et/ou phénol et/ou phénylpropanoïde et/ou flavonoïde naturel ou identique au naturel ; puis
c) compression (500) de la matière première organique en pellets et/ou en granulés.

2. Procédé selon la revendication 1, dans lequel la matière première organique, plus particulièrement la paille, est, lors du mélange (400), le cas échéant une fois dépoussiéré (200) et soumis à un traitement hydrothermique sous pression (300), est mélangé avec au moins un acide inorganique, plus particulièrement de l'acide chlorhydrique, de l'acide nitrique, de l'acide sulfurique ou avec leurs sels et/ou avec des acides organiques, plus particulièrement l'acide propionique, l'acide formique, l'acide sorbique, l'acide benzoïque, l'acide lactique, l'acide ascorbique, l'acide fumarique ou avec leurs sels avec un dosage de 1 kg à 10 kg pour 1 000 kg de matière première.

3. Procédé selon la revendication 1, dans lequel, lors du mélange (400), la matière première est mélangée, après la suspension bactérienne (420) et avant les monoterpènes et/ou les phénols et/ou les phénylpropanoïdes et/ou les flavonoïdes naturels ou identiques aux naturels (440), avec un bisulfite alcalin (430), plus particulièrement avec un bisulfite de sodium puis avec un alun.

4. Procédé selon l'une des revendications 1 à 3, dans lequel, lors du mélange (400), le monoterpène et/ou phénol et/ou phénylpropanoïde et/ou flavonoïde naturel ou identique au naturel est ajouté sous la forme d'au moins un extrait d'herbes et/ou d'un extrait d'épices ou sous la forme d'au moins une huile éthérique ou sous la forme d'au moins un agent actif pur avec un dosage de 0,2 kg à 5 kg et plus particulièrement avec un dosage de 0,5 kg à 2,0 kg pour 1 000 kg, à la matière première organique.

5. Procédé selon l'une des revendications 1 à 4, dans lequel, lors du mélange (400), la suspension bactérienne est pulvérisée, après le séchage (415) de la matière première mélangée avec l'acide (410), sous la forme d'une solution liquide sur la matière première, dans lequel la solution comprend plus particulièrement 500 millions à 2 milliards de bactéries par millilitre de solution.

6. Procédé selon la revendication 3, dans lequel le bisulfite alcalin, plus particulièrement le bisulfite de sodium, est pulvérisé sous la forme d'une solution liquide avec une concentration de 35 à 45 %, plus particulièrement de 38 % à 40 % sur la matière première.

7. Matériau de litière pour l'élevage d'animaux, obtenu grâce au procédé selon l'une des revendications 1 à 6, dans lequel le matériau de litière comprend des pellets et/ou granulés organiques, qui sont mélangés avec au moins un acide ou une combinaison d'acides ou de leurs sels, dans lequel les pellets et/ou les granulés sont mélangés avec au moins un monoterpène et/ou phénol et/ou phénylpropanoïde et/ou flavonoïde naturel ou identique au naturel et avec une suspension bactérienne, qui contient au moins une des espèces Bacillus amyloliquefaciens, Bacillus licheniformis, Bacillus subtilis, Bacillus megaterium et/ou Bacillus pumilus séparément ou en combinaisons.

8. Matériau de litière selon la revendication 7, dans lequel l'acide ou la combinaison d'acides comprend un acide inorganique, plus particulièrement de l'acide chlorhydrique, de l'acide nitrique, de l'acide sulfurique et/ou un acide organique, plus particulièrement l'acide propionique, l'acide formique, l'acide sorbique, l'acide benzoïque, l'acide lactique, l'acide ascorbique ou l'acide fumarique.

9. Matériau de litière selon la revendication 7 ou 8, dans lequel le dosage de l'au moins un acide et/ou son sel ou d'une combinaison d'acides, contenant au moins un acide, constituée de plusieurs acides ou sels différents, est de 1 à 10 kg pour 1 000 kg de pellets et/ou de granulés.

10. Matériau de litière selon l'une des revendications 7 à 9, dans lequel les pellets et/ou les granulés sont en outre mélangés avec un bisulfite alcalin, plus particulièrement le bisulfite de sodium et/ou un alun, plus particulièrement l'alun de potassium et d'aluminium.

11. Matériau de litière selon l'une des revendications 7 à 10, dans lequel le monoterpène et/ou phénol et/ou phénylpropanoïde et/ou flavonoïde naturel ou identique au naturel est contenu sous la forme d'au moins un extrait d'herbes et/ou d'épices ou sous la forme d'au moins une huile éthérique ou sous la forme d'au moins un agent actif pur dans le matériau de litière.

12. Matériau de litière selon l'une des revendications 7 à 11, dans lequel le phénol et/ou le flavonoïde végétal comprend au moins un des agents actifs (+)-terpinène-4-ol, a-terpinène, terpinéol, carvacrol, thymol, zimtaldéhyde, eugénol, linalool, carvon, anéthol, fenchon et cinéol.

13. Matériau de litière selon l'une des revendications 7 à 12, dans lequel le dosage du monoterpène et/ou phénol et/ou phénylpropanoïde et/ou flavonoïde naturel ou identique au naturel est de 0,2 kg à 5 kg pour 1 000 kg de pellets et/ou de granulés et de préférence de 0,5 kg à 2,0 kg pour 1 000 kg de pellets et/ou de granulés.
